# EUROPEAN PATENT SPECIFICATION

(11) **EP 1 386 714 B1**
(45) Date of publication and mention of the grant of the patent: **30.05.2007**
(21) Application number: 03017048.4
(22) Date of filing: 28.07.2003
(51) Int. Cl.: B29C 45/02, B29C 45/17, B29C 45/27

(54) **An injection moulding system for a material vulcanizable by heat**
Ein Spritzgiesssystem für ein durch Wärme vulkanisierbares Material
Un système de moulage par injection pour un matériau vulcanisable par la chaleur

(30) Priority: 30.07.2002 IT MI20021695; 30.07.2002 IT MI20021694; 19.02.2003 IT MI20030294
(43) Date of publication of application: 04.02.2004
(73) Proprietor: RUTIL S.r.l., 21050 Lonate Ceppino (Varese) (IT)
(72) Inventor: Coscia, Giovanni Antonio, 21100 Varese (IT)
(74) Representative: Faraggiana, Vittorio

(56) References cited:
- WO-A-98/12038
- DE-A- 3 122 566
- US-A- 3 121 918
- US-A- 3 843 289
- US-A- 4 089 926
- PATENT ABSTRACTS OF JAPAN vol. 4, no. 171 (M-44), 26 November 1980 (1980-11-26) -& JP 55 121044 A (INOUE MTP CO LTD), 17 September 1980 (1980-09-17)

## Description

The present invention relates to an injection moulding system for a material vulcanizable by heat, such as rubber, elastomers or the like.

In injection moulding, of the type generally referred to as cold transfer moulding, the upper portion of the mould where the material-feeding channels or sprues are contained is to be maintained to a thermally controlled temperature through fluid circulation so that the material does not chemically react giving rise to a vulcanization reaction. The mould portion holding the impressions is, on the contrary, heated by means of electric resistances to the vulcanization temperature and gives rise to vulcanization of the material injected into the mould.

An insulating material constituting the breaking point between the two temperatures is interposed between the two mould portions, whereas the ducts along which the thermal fluid runs and the electric resistances perform the function of thermoregulating the mould to the due temperatures. With such a known structure it is rather difficult to have a well precise and localized temperature transition point and it is more likely that the temperatures should be distributed along the sprues, exposing the material therein to an excessive temperature, which is so close to the vulcanization temperature that scorching phenomena during the injection may be caused so that a scrap increase occurs.

In addition, sprues must pass through the insulating material layer. Due both to the high abrasiveness of the injected material and the reduced resistance of the insulating materials to be employed, the mould duration is seriously impaired.

In the known art it was proposed to coat the channels at the passage through the insulating material by interposition of small cylinders of steel material. This solves the problem of wear but unfortunately in turn gives rise to heat migration exactly from the region where the maximum thermal control would be necessary.

As a further problem, due to the necessity to receive in the mould the thermal-fluid ducts and the housing accommodating the resistances (which resistances, taking into account the concerned power, must have important sizes), as well as to the necessity for a suitable thermal separation between the two regions, the feeding channels are compulsorily to be made rather long in the hot region causing, as a result, formation of sprues of relatively extended length. This leads to a material waste that, in particular in the case of particularly valuable materials, greatly affects the costs of the moulded product, above all if it is of small sizes.

Also proposed have been moulds in which the mould is separable into a first portion containing the first sections of the feeding channels and a second portion containing end sections of the feeding channels and the moulding impressions. After rubber injection, a heated plate-like element is inserted between the first and second mould portions to bring the mould portion containing the impressions to a vulcanization temperature. The known plate-like element has a simple structure with a heating resistance close to the face in contact with the second mould portion. A layer of insulating material separates the resistance from the face of the plate-like element that is in contact with the first mould portion to prevent the plate from heating too much on such a side and cause vulcanization of the material in the feeding channels in the first portion too. The insulating material however has a reduced efficiency because the plate-like element must be preferably maintained to a small thickness.

In US 4,089,926 a proposal has been made of increasing efficiency of the thermal insulation by means of cooling channels placed between the resistance and the insulating layer. This hinders heat passage towards the first mould portion but does not supply any type of control on the temperature of said first mould portion.

In addition, since the end portion of the ducts close to the impressions is in any case exposed to the vulcanization temperature, the material therein is submitted to vulcanization and must be removed at the end of each moulding cycle. In the case of moulding with side channels, the vulcanized material in the channels keeps attached to the moulded product and can be easily removed therewith. In the case of moulding of the "capillary" type on the contrary, the end portion of the ducts tapers into a cone-shaped configuration towards the impression and therefore it is not possible to slip the material off pulling it towards the impression. On the contrary, it must be separated from the moulded product and the resulting plug or sprue must be extracted in the opposite direction, with a further operation distinct from the operation for extracting the moulded product. The plugs or sprues to be extracted are all separated from each other and of a relatively great number. As can be easily understood, the extraction operation is therefore rather hard and the time required for a complete extraction is very long. In addition, if an automated extraction is wished to be obtained, very expensive and delicate unloading apparatus are to be manufactured, which practically will make the automatic unloading inconvenient.

In an attempt to solve the problem, moulds have been proposed in which there is an opening plane of the mould in an intermediate region of the end portion of the channels, in the neighbourhood of the separation point between the vulcanized region and semi-vulcanized region of the material in the end ducts. Before each mould closure, a sheet of a so-called "fabric", i.e. a non-woven fabric of a particular texture, is inserted in this opening plane. The sheet enables clinging of the rubber filtering therethrough during the injection step, allowing extraction of all plugs with a single movement of removing the sheet after vulcanization and reopening of the mould.

Use of fabrics however has some contraindications. First of all the cost, which is sometimes so high that it even exceeds the cost for use of a hot transfer (involving a much higher material waste for each moulding operation).

Secondly, the material of which the fabric is made is a thermoplastic material so that at high working temperatures it loses its consistency and can leave some plugs in place in the mould, which will bring about an important hindrance to production; or alternatively the fabric or pieces thereof can be carried along into the impression by the injected material flow, giving rise to scraps of the product.

DE 31 22 566 discloses use of a plate having projections each of which fits into a plug for extracting the latter from the channel on moving of the plate apart. But the projections cause side leakage of the rubber from the channels and, as a result, soiling of the mould, and difficulties in terms of closure and removal.

Due to the relatively high length of the sprues to be extracted, removal of same is made still more difficult, even by use of said fabric.

It is a general aim of the present invention to obviate the above mentioned drawbacks by providing a moulding system enabling a great reduction in the scraps and the waste material to be obtained due to an important reduction in the length of the sprues and to a satisfactory thermal separation between the vulcanization region and the material-feeding region.

In view of the above aim, in accordance with the invention, an injection moulding system for a material vulcanizable by heat has been conceived which comprises a mould with moulding impressions fed from channels for feeding the material in the fluid state and means for vulcanizing the material in the impressions, characterized in that the mould is separable into a first portion containing first sections of the feeding channels and a second portion containing end sections of the feeding channels and the moulding impressions, the vulcanizing means comprising an element that is interposed in contact relationship between said first and second mould portions after feeding of the material to the impressions and in turn comprising first means for maintaining the element surface coming into contact with the first portion to a temperature suitable to avoid vulcanization of the material in the first channel sections, and second means for heating the opposite element surface coming into contact with the second mould portion to a temperature high enough to bring the material in the impressions to a temperature adapted to vulcanization of same, around the channels the first mould portion extending into the second portion so that the end sections of the channels remaining in the second portion have a reduced length.

For better explaining the innovative principles of the present invention and the advantages it offers over the known art, a possible exemplary embodiment applying such principles will be described hereinafter, with the aid of the accompanying drawings: In the drawings:
- Fig. 1 is a diagrammatic exploded elevation side view in section of a moulding system in accordance with the invention;
- Fig. 2 represents a diagrammatic view of a detail of the mould in Fig. 1 to an enlarged scale;
- Fig. 3 is a view of the system in a first operating step;
- Fig. 4 is a view of the system in a second operating step;
- Fig. 5 is a diagrammatic exploded elevation side view in section of an alternative embodiment of the moulding system in accordance with the invention;
- Fig. 6 represents a diagrammatic view of a detail of the mould in Fig. 5 to an enlarged scale;

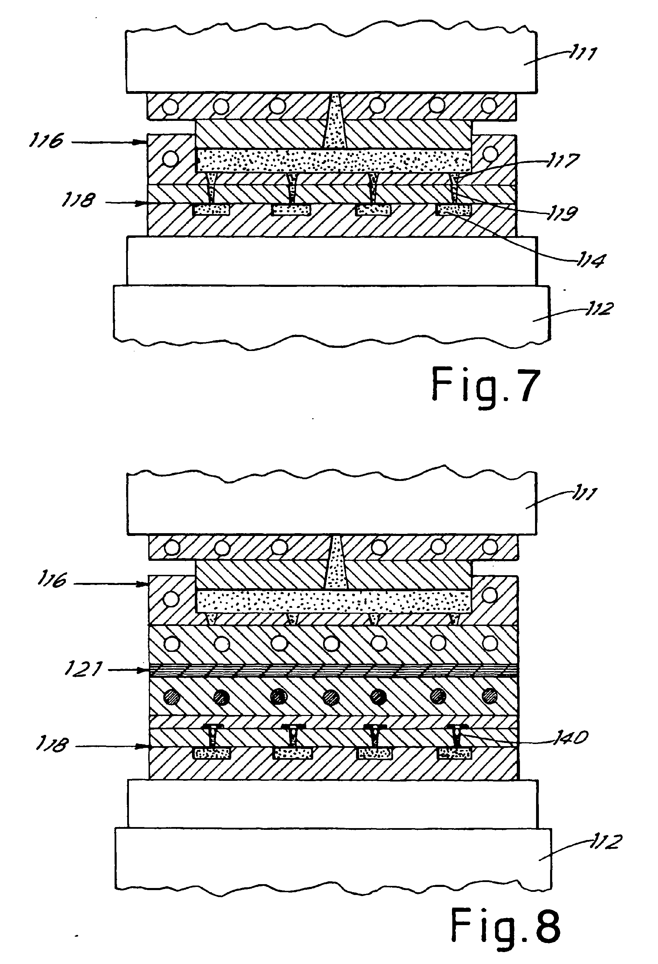

- Fig. 7 is a view of the system in Fig. 5 in a first operating step;
- Fig. 8 is a view of the system in Fig. 5 in a second operating step;

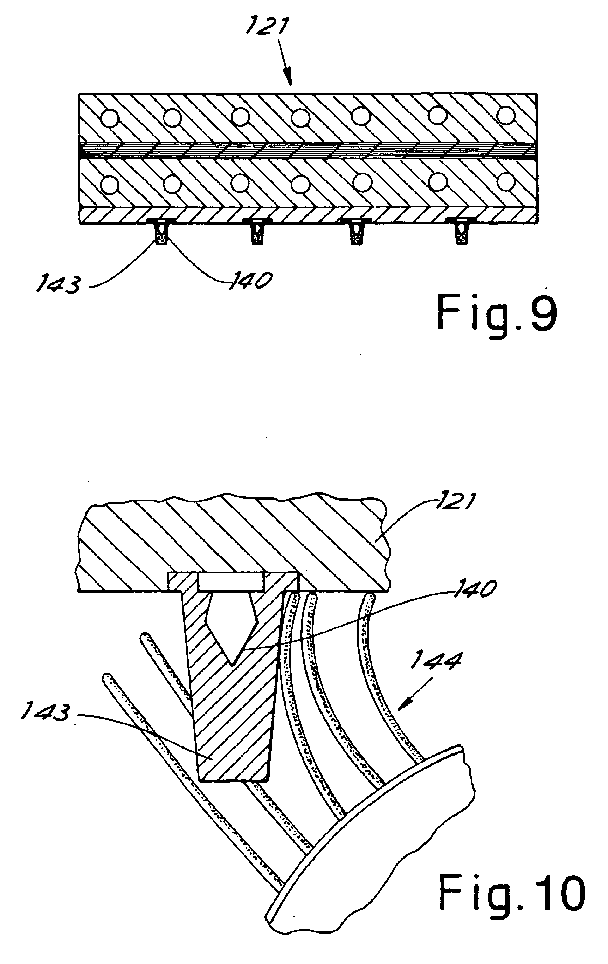

- Fig. 9 is a view of an element of the system in Fig. 5 in a third operating step;
- Fig. 10 is an enlarged view of a detail of the element in Fig. 9;
- Fig. 11 is a diagrammatic exploded elevation side view in section of a third embodiment of a moulding system in accordance with the invention;
- Fig. 12 is a diagrammatic view of a detail of the mould in Fig. 11 to an enlarged scale.

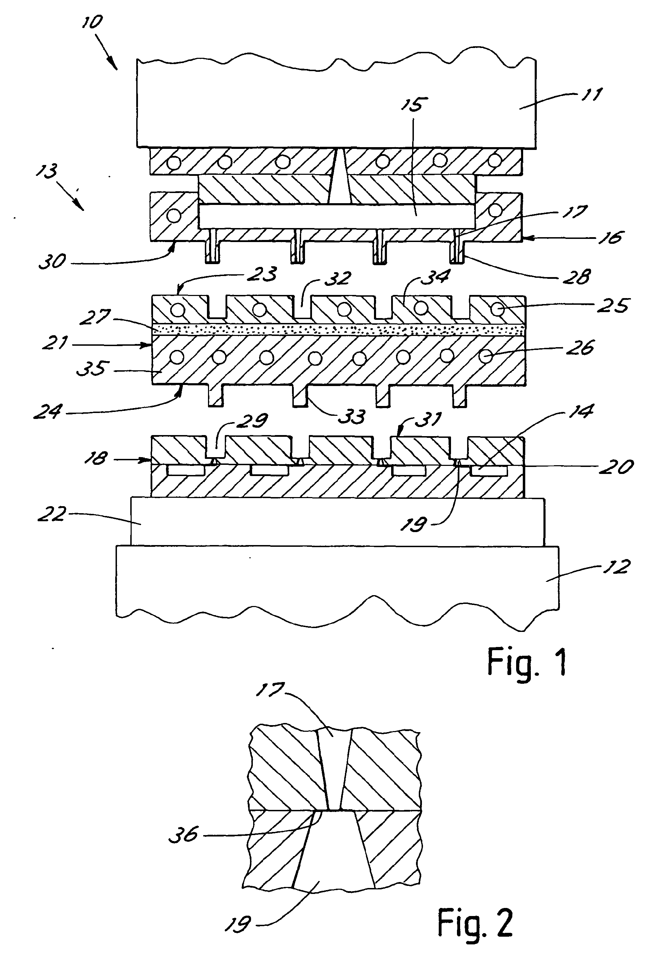

With reference to the drawings, a first injection moulding system (generally identified with 10) for a material vulcanizable by heat such as rubber, elastomers or the like is shown in Fig. 1.

The system, between two press plates 11 and 12, comprises a mould 13 with impressions or moulding chambers 14 that are fed from appropriate channels for feeding the material in the fluid state. The injection system therein shown is of the type usually known as "cold transfer moulding" in which the fluid material is injected from a source (not shown) into a transfer cylinder 15 and therefrom to impressions 14 during a transfer step caused by closure of the press. This transfer system is not hereinafter further described or shown, as it can be easily envisaged by a persons skilled in the art.

As clearly shown in Fig. 1, in accordance with a principle of the invention, the mould is made separable into a first portion 16 containing first sections 17 of the feeding channels and a second portion 18 containing end sections 19 of the feeding channels and the moulding impressions 14. In the mould shown by way of example, injection into the impressions is of the side type.

Portion 18 containing the impressions obviously can be conveniently opened (line 20) for extraction of the moulded articles.

For vulcanization of the material injected into the impressions, appropriate heating means is provided. Said heating means comprises an element 21 that (as clarified in the following) is interposed in contact relationship between the first and second portions of the mould after feeding of the material to the impressions. In addition, the mould portion provided with impressions 14 is supported by the respective press plate 12 through interposition of a known heating platform 22.

The intermediate element 21 in turn comprises first means 25, 27 designed to keep the element surface 23 coming into contact with the first mould portion 16 to a temperature adapted to avoid vulcanization of the material in the first channel sections 17, and second means 26 designed to heat the opposite element surface 24 coming into contact with the second mould portion 18 to a temperature high enough to bring the material in the impressions 14 to a temperature adapted to vulcanization of same.

The first means comprises a circuit for forced circulation of a fluid (advantageously a thermal carrier liquid) through ducts 25 disposed in a region 34 of element 21 which is close to the element contact surface 23 with the first mould portion 16.

As will be apparent in the following, the fluid fed into ducts 25 will be a thermoregulated fluid (by heat-exchanger means known in itself, and therefore not shown in detail) to keep its temperature to a pre-established and appropriate temperature range. This will enable the face 23 of element 21 to be maintained within a pre-established temperature range (under the vulcanization temperature but close thereto). Therefore the first means is not used for carrying out a mere and indiscriminate cooling but it is also an active thermoregulating means to control temperature of the surface 23 of element 21.

The second means comprises electric heating resistances 26 disposed in a region 35 of element 21 that is close to the element contact surface 24 with the second mould portion 18. The two regions 34 and 35 are separated by a region 27 made of a suitable thermally insulating material to reduce heat transfer between the two regions 34 and 35 to a satisfactory value.

As clearly viewed still from Fig. 1, around the feeding channels the first mould portion 16 further extends by means of projections 28 to be fitted into mating seats 29 in the second mould portion 18 to bring the channel sections 17 in the first portion to match the end sections 19 in the second portion. In this way a reduced length of the end sections of the channels present in the second portion is obtained.

Surfaces 23, 24 of element 21 that are the contact surfaces with the respective surfaces 30, 31 of the first and second mould portions are shaped in a complementary manner with the latter so as to have seats 32 for receiving projections 28, as well as projections 33 intended for fitting into the underlying seats 29.

Advantageously, for reasons to be clarified in the following, in the material feeding direction the first sections 17 of the feeding channels taper, the end sections 19 become wider at least at the beginning, and in the transition or interface region between the first section and end section of the channel a sudden widening 36 of the feeding channel occurs, as clearly shown in Fig. 2.

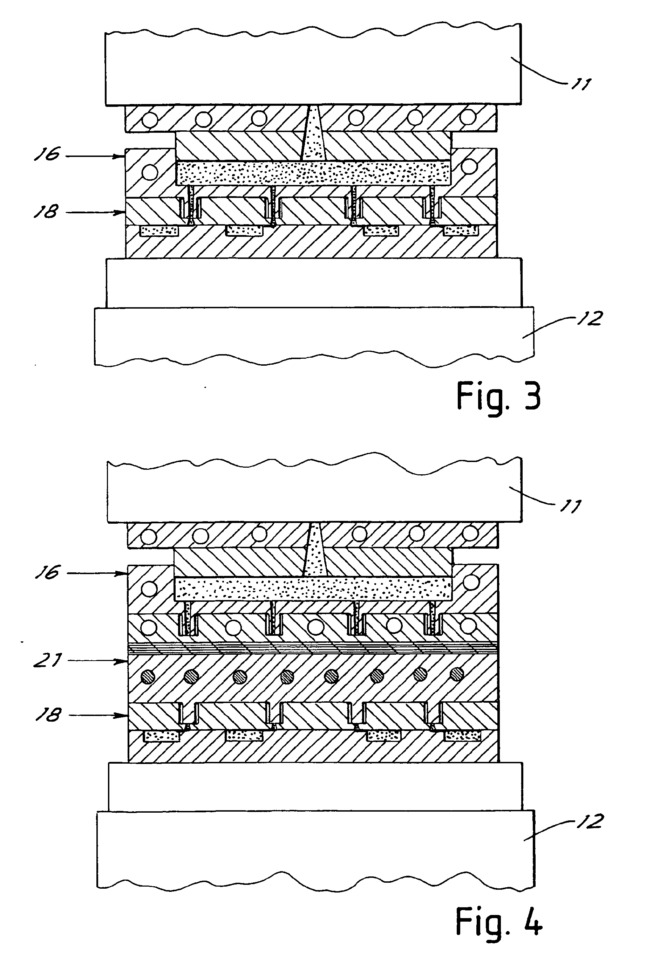

The moulding system in use contemplates a first step in which the intermediate element 21 is removed and the press is operated to the appropriate pressure so that the mould portions 16 and 18 are moved close to each other and the normal injection step with material transfer to the impressions 14 through the feeding channels occurs, as shown in Fig. 3.

After filling of impressions 14, the mould portions 16, 18 are moved again away from each other. During this step, region 36 at the joining point between the two sections 17 and 19 of the feeding channels constitutes the frangible point of the material in the channel itself.

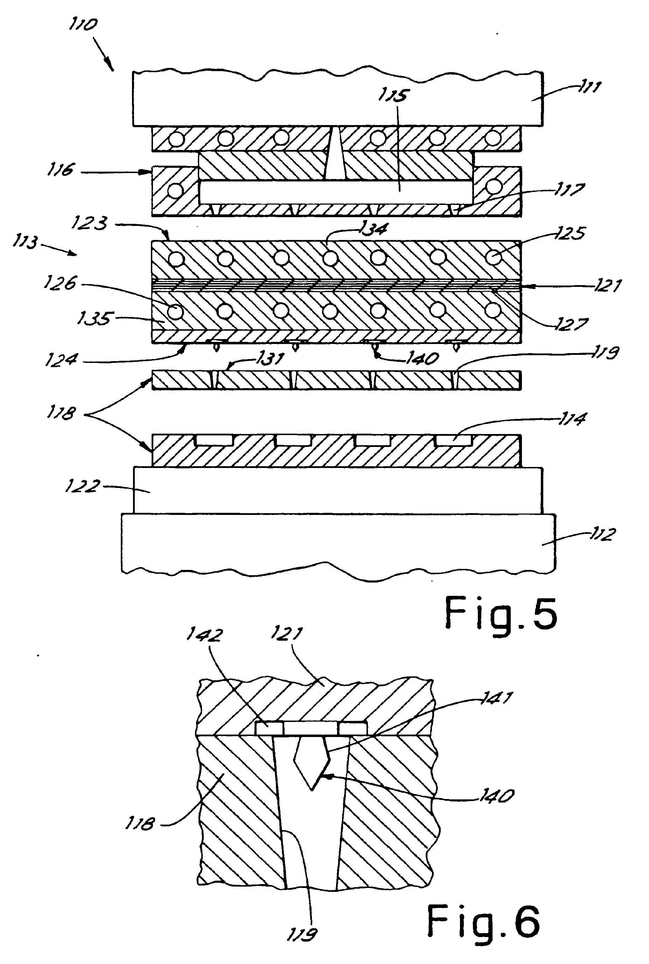

Subsequent to the above separation, element 21 is inserted between the two mould portions and the press is operated again and closed to the established pressure for the vulcanization step (Fig. 4). Movement of element 21 may take place through automated actuating means not shown because it can be easily envisaged by a person skilled in the art.

Thus the mould portion provided with the impressions is brought to the vulcanization temperature (which temperature depends on the moulded material and is typically in the neighbourhood of 200°C). On the contrary, the vulcanization heat is prevented from reaching the feeding channels in portion 16 due to the insulating material 27 and to the liquid running in ducts 25. The liquid will be maintained to a suitable temperature so as to achieve a thermoregulation avoiding the material temperature in the channel sections 17 coming inconveniently close to the vulcanization temperature (for instance, the temperature can be maintained in the neighbourhood of 60-100°C), but also advantageously preventing the temperature from becoming too much low as compared with the vulcanization temperature.

When the vulcanization step has been completed, the mould can be opened, the moulded pieces removed and the cycle can be started again with a new injection step.

Shown in Fig. 5 is a second embodiment applying the principles of the invention. For the sake of clarity, elements similar to those of the previous embodiment will be denoted by the same reference numerals increased by 100. Thus, there is a system 110 that, between two press plates 111 and 112, comprises a mould 113 with impressions or moulding chambers 114 that are fed from appropriate channels for feeding the material in the fluid state. The fluid material is injected from a source (not shown) into a transfer cylinder 115 and therefrom to impressions 114 during a transfer step caused by closure of the press.

As clearly shown in Fig. 5, the mould is made separable into a first portion 116 containing first sections 117 of the feeding channels and a second portion 118 (susceptible of opening for extraction of the moulded products) containing end sections 119 of the feeding channels and the moulding impressions 114. The end sections 119 taper towards the impressions 114. The upper plate of portion 118 holding the end sections 119 will have a low thickness sufficient to resist the efforts to which it is submitted.

Advantageously, the channel sections 117 and 119 will have a junction interface made in known manner (with a sudden section change, for example) so as to promote separation of the material on separation of portions 116, 118. Sections 117 can also be made of conical shape opposite to the conical shape of sections 119.

For vulcanization of the material injected into the impressions, appropriate heating means is provided.

An intermediate element 121 is interposed in contact relationship between the first and second mould portions after material feeding to the impressions, and creates insulation between the first and second mould portions.

As can be seen in Fig. 5 and, to an enlarged scale in Fig. 6, the surface 124 of element 121 comprises fitting projections 140 that are conveniently positioned and sized for entering the channel sections 119 when the surface 124 of element 121 is brought into contact with the corresponding surface 131 of the mould portion 118.

Projections 140 are shaped for clinging to the material being vulcanized in the duct section 119. The projection shape is such selected that the clinging force is sufficient to cause extraction of the plug from the duct, but low enough to enable the subsequent separation of the material plug from the projection. As shown in Fig. 6, projections 140 are for example shaped with a sufficient undercut 141 and advantageously have a tapered head end for easy penetration into the material before vulcanization.

As clearly viewed from Fig. 6, around each projection 141, the surface 124 has a relief 142 of a volume adapted to receive the material coming out of duct 119 when projection 140 penetrates thereinto. In other words, the chamber formed of the relief 142 is of at least the same volume as the projection portion 140 entering the duct 119.

As in the preceding embodiment, the intermediate element 121 in turn comprises first means 125, 127 designed to keep the element surface 123 coming into contact with the first mould portion 116 to a temperature adapted to avoid vulcanization of the material in the first channel sections 117, and second means 126 designed to heat the opposite element surface 124 coming into contact with the second mould portion 118 to a temperature high enough to bring the material in the impressions 114 to a temperature adapted to vulcanization of same. The first means comprises a circuit for forced circulation of a thermoregulated fluid through ducts 125 disposed in a region 134 of element 121 which is close to the element contact surface 123 with the first mould portion 116. The second means comprises electric heating resistances 126 disposed in a region 135 of element 121 that is close to the element contact surface 124 with the second mould portion 118. The two regions 134 and 135 are separated by a region 127 made of a suitable thermally insulating material to reduce heat transfer between the two regions 134 and 135 to a satisfactory value.

Advantageously, the mould portion provided with impressions 114 is supported by the respective press plate 112 through interposition of a known heating platform 122.

During use of the moulding system, the operating steps are similar to those described for the preceding embodiment. There is a first step in which the intermediate element 121 is removed. After filling of the impressions 114, the mould portions 116, 118 are moved apart again and element 121 is inserted for the vulcanization step.

When the vulcanization step is over, the mould is opened, and the moulded pieces can be removed. Simultaneously, element 135, by moving away from the mould surface 131, extracts all plugs 143 from the channel sections 119.

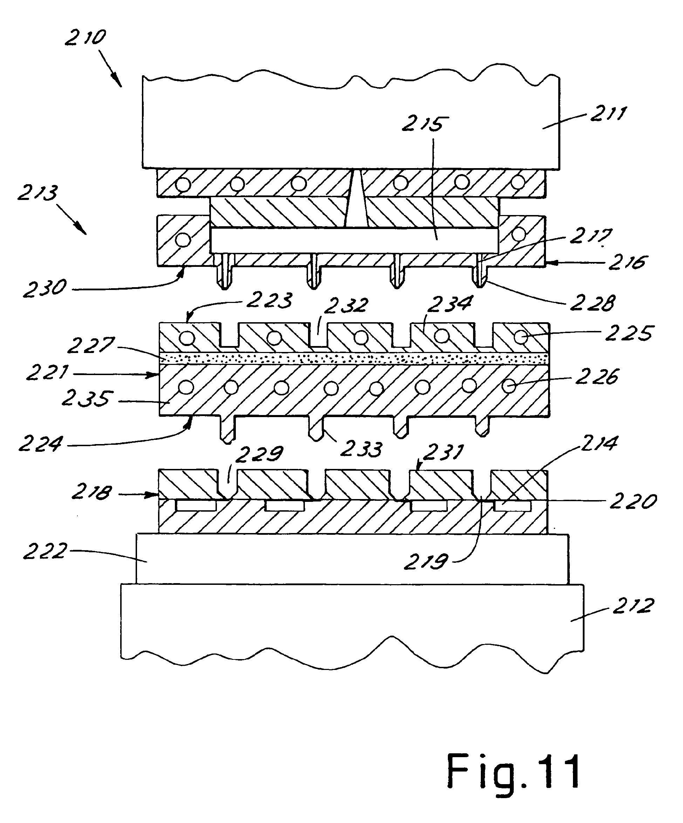

Plugs 143 can then be easily removed from the projections by means of known means contemplating a rotating brush 144, for example, as shown in Fig. 10. For obtaining easy removal, the height of the projection 140 can be advantageously greatly smaller than the length of the extracted plug, so that removal takes place by side bending of the plug on the projection.

Thus, the moulding cycle can start again with a new injection step.

Shown in Fig. 11 is an alternative embodiment of the mould in accordance with the invention. For the sake of clarity elements similar to those of the prior embodiments will be denoted by the same reference numerals increased by 200.

System 210, between two press plates 211 and 212, comprises a mould 213 with impressions or moulding chambers 214. The fluid material is injected from a source (not shown) into a transfer cylinder 215 and therefrom to impressions 214.

The mould is made separable into a first portion 216 containing first sections 217 of the feeding channels and a second portion 218 containing end sections 219 of the feeding channels and the moulding impressions 214. In the mould shown by way of example injection into the impressions is of the lateral type.

The portion 218 containing the impressions can be obviously suitably opened (line 220) for extraction of the moulded products.

For vulcanization of the material injected into the impressions, appropriate heating means is provided. Said means comprises an element 221 that is interposed in contact relationship between the first and second mould portions after material feeding to the impressions. In addition, the mould portion provided with the impressions 214 is supported by the respective press plate 212 through interposition of a known heating platform 222.

The intermediate element 221 in turn comprises first means 225, 227 designed to keep the element surface 223 coming into contact with the first mould portion 216 to a temperature adapted to avoid vulcanization of the material in the first channel sections 217, and second means 226 designed to heat the opposite element surface 224 coming into contact with the second mould portion 218 to a temperature high enough to bring the material in the impressions 214 to a temperature adapted to vulcanization of same.

The first means comprises a circuit for forced fluid circulation through ducts 225 disposed in a region 234 of element 221 which is close to the element contact surface 223 with the first mould portion 216.

The second means comprises electric heating resistances 226 disposed in a region 235 of element 221 that is close to the element contact surface 224 with the second mould portion 218. The two regions 234 and 235 are separated by a region 227 made of a suitable thermally-insulating material to reduce heat transfer between the two regions 234 and 235 to a satisfactory value.

Around the feeding channels, the first mould portion 216 extends by means of projections 228 to be fitted into mating seats 229 in the second mould portion 218 to bring the channel sections 217 in the first portion to match with the end sections 219 in the second portion. In this way a reduced length of the end sections of the channels present in the second portion is obtained.

Surfaces 223, 224 of element 221 that are the contact surfaces with the respective surfaces 230, 231 of the first and second mould portions are shaped in a complementary manner with the latter so as to have seats 232 for receiving projections 228, as well as projections 233 intended for fitting into the underlying seats 229.

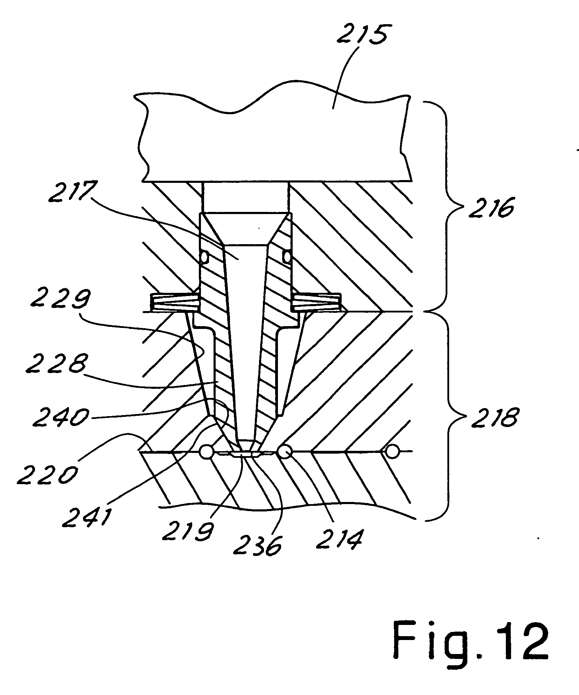

Shown in detail in Fig. 12 is a preferred embodiment of projections 228, made in the form of screwed injectors or injectors axially slidable over a small stretch against an elastic force in the body of portion 216.

As can be clearly seen in this figure, advantageously, the first section 217 of the feeding channel tapers in the material feeding direction. The end section 219 becomes wider at least at the beginning, and in the transition or interface region between the first section and end section of the channel a sudden widening 236 of the feeding channel occurs. The junction line or plane between the first and second channel sections is substantially coincident with the opening line or plane 220 of the moulding cavities in the second portion. In other words, the nozzle 228 has its end reaching the opening plane of the mould.

Advantageously, the injector has its point end 241 of conical shape to be received almost snugly and substantially sealingly into a matching conical seat 240 constituting the bottom of seat 229 in the second mould portion.

The mould shown in Fig. 12 has moulding cavities 214 to make gaskets of the O-ring type.

Each injector terminates in the middle of the O-ring to feed rubber in a radial manner thereto.

With injectors in accordance with the invention and directly injecting on the mould plane from the side of the moving plane, automatic extraction of the moulded articles has been found particularly easy. Not only extraction of the pieces is made easier, but a further rubber saving is also obtained as well as the certainty that no rubber remains in the mould on the side of the moving plane thereby creating possible waste material.

In use, in a first step the intermediate element 221 is removed and the material is injected into the impressions 214 through the injectors. Element 221 is then inserted between the two mould portions through means known in itself (not shown) and the press is closed again to the established pressure for the vulcanization step. The mould portion provided with the impressions is brought to the vulcanization temperature while the liquid in ducts 225 keeps the mould portion provided with channels 217 to a suitably lower temperature (60-100°C, for example) thereby avoiding vulcanization of the material therein. When the vulcanization step has been completed in the impressions, the mould is opened, the moulded pieces removed and the cycle can start a new injection step again.

At this point it is apparent that the intended purposes have been achieved, by making an intermediate element divided into a first portion or layer which is thermoregulated to maintain it to a temperature close to but lower than the vulcanization temperature (it may be even little lower but always in a fully safe manner) and a second portion or layer that is heated to the vulcanization temperature, with the two portions advantageously separated by a thermally insulating layer for more thermal independence.

It is apparent that the length of the vulcanized sprue (corresponding to the end section 19, 119, 219 alone) is reduced and represents a small percentage of the length obtainable with known systems. In addition, the risk of vulcanizations or pre-vulcanizations of the material remaining in the channels for the subsequent moulding cycle is completely avoided.

With the system in accordance with the invention, the amount of waste material and scraps is greatly reduced as compared with known systems, without unacceptable slowing down or complexity in the moulding cycle taking place for this reason.

Extraction of the vulcanized sprues or plugs is efficient, simple and reliable.

Obviously, the above description of an embodiment applying the innovative principles of the present invention is given by way of example only and therefore must not be considered as a limitation of the scope of the patent rights herein claimed. For example, sizes and proportions of the different parts and number and arrangement of the impressions and feeding channels can vary depending on specific requirements. Projections 40 can consist of inserts that are locked, by means of screws for example, into appropriate seats in the body of the intermediate element, either directly or by interposition of a suitable plate.

## Claims

1. An injection moulding system for a material vulcanizable by heat, comprising a mould (13, 113, 213) with moulding impressions (14, 114, 214) fed from channels (17, 19, 117, 119, 217, 219) for feeding the material in the fluid state and means (21, 121, 221) for vulcanizing the material in the impressions, the mould being separable into a first portion (16, 116, 216) containing first sections (17, 117, 217) of the feeding channels and a second portion (18, 118, 218) containing end sections (19, 119, 219) of the feeding channels and the moulding impressions (14, 114, 214), the vulcanizing means comprising an element (21, 121, 221) that is interposed in contact relationship between said first and second mould portions after feeding of the material to the impressions and in turn comprising means (26, 126, 226) for heating the element surface (24, 124, 224) coming into contact with the second mould portion (18, 118, 218) to a temperature high enough to bring the material in the impressions (14, 114, 214) to a temperature adapted to vulcanization of same, around the channels the first mould portion (16, 116, 216) extending into the second portion (18, 118, 218) so that the end sections (19, 119, 219) of the channels remaining in the second portion have a reduced length, **characterized in that** the interposed element (21, 121, 221) comprises thermoregulating means (25, 125, 225) for maintaining the element surface (23, 123, 223) coming into contact with the first portion (16, 116, 216) to a temperature suitable to avoid vulcanization of the material in the first channel sections (17, 117, 217).

2. A system as claimed in claim 1, **characterized in that** the surfaces (23, 24, 123, 124, 223, 224) of the element (21, 121, 221) that are contact surfaces with surfaces (30, 31, 130, 131, 230, 231) of the first and second mould portions have shapes matching those of said surfaces (30, 31, 130, 131, 230, 231) of the first and second mould portions.

3. A system as claimed in claim 1, **characterized in that** in the material-feeding direction the first channel sections (17, 117, 217) taper, the end sections (19, 119, 219) become wider at least at the beginning, and in the transition region (36, 136, 236) between the first and end sections of the channel there is a sudden widening of the channel so that transition constitutes a frangible point of the material in the channel on moving of the first and second mould portions away from each other.

4. A system as claimed in claim 1, **characterized in that** the thermoregulating means comprises ducts (25, 125, 225) for fluid circulation, placed in a region (34, 134, 234) of the element (21, 121, 221) that is close to the element contact surface with the first mould portion.

5. A system as claimed in claim 1, **characterized in that** the heating means comprises electric heating resistances (26, 126, 226) disposed in a region (35, 135, 235) of the element (21, 121, 221) that is close to the element contact surface with the second mould portion.

6. A system as claimed in claims 4 and 5, **characterized in that** the region (34, 134, 234) with the ducts for fluid circulation and the region (35, 135, 235) with the electric resistances are separated from each other by an intermediate region (27, 127, 227) of thermally insulating material.

7. A system as claimed in claim 4, having means by which the fluid is thermoregulated to be maintained to a temperature close to but lower than the vulcanization temperature.

8. A system as claimed in claim 1, **characterized in that** the interposed element (121) comprises projections (140) that are conveniently sized and positioned for fitting into said end sections (119) on moving of the element close to said second mould portion, and for extracting the vulcanized material from said end sections on moving of said element again away from the second mould portion.

9. A system as claimed in claim 8, **characterized in that** the projections (140) define an undercut (141) for clinging into the material at the channel end sections (119).

10. A system as claimed in claim 8, **characterized in that** a chamber (142) is provided around each projection (140), the volume of said chamber being sufficient to receive the material urged out of the end section (119) on penetration of the projection thereinto.

11. A system as claimed in claim 8, **characterized in that** the projection (140) is greatly shorter than the channel end section.

12. A system as claimed in claim 8, **characterized in that** the junction line (236) between first and second channel sections is substantially coincident with an opening line (220) of the moulding cavities in the second portion.

13. A system as claimed in claim 1, **characterized in that** the first mould portion extends into the second portion by means of injectors (228) mounted on the body of the first portion and containing the first channel section.

14. A system as claimed in claim 13, **characterized in that** the injectors have a point end (241) of conical shape to be received almost snugly into a matching conical seat (240) in the second mould portion.

15. A system as claimed in claim 13, **characterized in that** the injectors are mounted in an elastically yielding manner in an axial direction.

## Patentansprüche

1. Sprüzgießsystem bzw. -formsystem für ein durch Hitze vulkanisierbares Material, umfassend ein Formwerkzeug (13, 113, 213) mit formgebenden Vertiefungen (14, 114, 214) beschickt aus Kanälen (17, 19, 117, 119, 217, 219) zum Beschicken des Materials in fluidem Zustand und Mittel (21, 121, 221) zum Vulkanisieren des Materials in den Vertiefungen,
wobei das Formwerkzeug in ein erstes Teil (16, 116, 216) enthaltend erste Abschnitte (17, 117, 217) der Zuführungskanäle und ein zweites Teil (18, 118, 218) enthaltend Endabschnitte (19, 119, 219) der Zuführungskanäle und die formgebenden Vertiefungen (14, 114, 214) trennbar ist,
die vulkanisierenden Mittel ein Element (21, 121, 221), das in berührender Beziehung zwischen dem ersten und zweiten Formwerkzeugteil nach Beschickung des Materials zu den Vertiefungen dazwischen angeordnet ist, umfassen und desweiteren Mittel (26, 126, 226) zum Erhitzen der Elementfläche bzw. - oberfläche (24, 124, 224) umfassen, die in Kontakt bzw. Berührung, mit dem zweiten Formwerkzeugteil (18, 118, 218) kommt, auf eine Temperatur hoch genug, um das Material in den Vertiefungen (14, 114, 214) auf eine der Vulkanisation desselben angepaßte Temperatur zu bringen,
um die Kanäle herum sich das erste Formwerkzeugteil (16, 116, 216) in das zweite Teil (18, 118, 218) hinein erstreckt, so daß die Endabschnitte (19, 119, 219) der Kanäle, die im zweiten Teil verbleiben, eine reduzierte Länge haben,
**dadurch gekennzeichnet, daß**
das dazwischen angeordnete Element (21, 121, 221) thermoregulierende Mittel (25, 125, 225) umfaßt, um die Elementfläche bzw, -oberfläche (23, 123, 223), die in Kontakt bzw, Berührung, mit dem ersten Teil (16, 116, 216) kommt, auf eine Temperatur zu halten, die geeignet ist ein Vulkanisieren des Materials in den ersten Kanalabschnitten (17, 117, 217) zu vermeiden.

2. System nach Anspruch 1, **dadurch gekennzeichnet, daß**
die Flächen bzw. Oberflächen (23, 24, 123, 124, 223, 224) des Elements (21, 121, 221), die Kontaktflächen bzw. -Oberflächen mit den Flächen bzw. Oberflächen (30, 31, 130, 131, 230, 231) der ersten und zweiten Formwerkzeugteile sind, Gestalten bzw. Formen passend bzw. entsprechend zu denen der Flächen bzw. Oberflächen (30, 31, 130, 131, 230, 231) des ersten und zweiten Formwerkzeugteils aufweisen.

3. System nach Anspruch 1, **dadurch gekennzeichnet, daß**
in der Materialbeschickungsrichtung die ersten Kanalabschnitte (17, 117, 217) sich verjüngen, die Endabschnitte (19, 119, 219) zumindest am Anfang weiter werden, und es im Übergangsbereich (36, 136, 236) zwischen dem ersten und dem Endabschnitt des Kanals ein abruptes Erweitern des Kanals gibt, so daß der Übergang einen Bruchpunkt des Materials im Kanal beim Bewegen des ersten und zweiten Formwerkzeugteils voneinander weg darstellt.

4. System nach Anspruch 1, **dadurch gekennzeichnet, daß**
das thermoregulierende Mittel Leitungen bzw. Röhren (25, 125, 225) zur Fluidzirkulation aufweist, plaziert in einem Bereich (34, 134, 234) des Elements (21, 121, 221), welcher nahe zur Elementkontaktfläche bzw. -oberfläche mit dem ersten Formwerkzeugteil ist.

5. System nach Anspruch 1, **dadurch gekennzeichnet, daß**
die Heizmittel elektrische Heizwiderstände (26, 126, 226) umfassen, angeordnet in einem Bereich (35, 135, 235) des Elementes (21, 121, 221), welcher nahe zur Elementkontaktfläche bzw. -oberfläche mit dem zweiten Formwerkzeugteil ist.

6. System nach den Ansprüchen 4 und 5, **dadurch gekennzeichnet, daß**
der Bereich (34, 134, 234) mit den Leitungen zur Fluidzirkulation und der Bereich (35, 135, 235) mit den elektrischen Widerständen voneinander durch einen dazwischen liegenden Bereich (27, 127, 227) aus thermisch isolierendem Material getrennt sind.

7. System nach Anspruch 4, aufweisend Mittel, mit denen das Fluid thermoreguliert ist, um auf eine Temperatur nahe an aber niedriger als die Vulkanisiertemperatur gehalten zu werden.

8. System nach Anspruch 1, **dadurch gekennzeichnet, daß**
das dazwischen angeordnete Element (121) Vorsprünge (140) umfaßt, die passend bemessen und positioniert sind, um beim Bewegen des Elementes nahe zum zweiten Formwerkzeugteil in die Endabschnitte (119) zu passen, und um das vulkanisierte Material beim Bewegen des Elementes wieder von dem zweiten Formwerkzeugteil weg von den Endabschnitten zu extrahieren.

9. System nach Anspruch 8, **dadurch gekennzeichnet, daß**
die Vorsprünge (140) eine Hinterschneidung (141) ausbilden in die hinein sich das Material an den Kanalendabschnitten (119) anschmiegt bzw. anliegt.

10. System nach Anspruch 8, **dadurch gekennzeichnet, daß**
eine Kammer (142) um jeden Vorsprung (140) herum bereitgestellt ist, das Volumen dieser Kammer ausreichend ist, um das Material aufzunehmen, welches aus den Endabschnitten (119) beim Eindringen der Vorsprünge dort hinein heraus gedrängt wurde.

11. System nach Anspruch 8, **dadurch gekennzeichnet, daß**
der Vorsprung (140) viel kürzer als der Kanalendabschnitt ist.

12. System nach Anspruch 8, **dadurch gekennzeichnet, daß**
die Verbindungslinie (236) zwischen erstem und zweitem Kanalabschnitt im wesentlichen mit einer Öffnungslinie (220) der Formvertiefungen im zweiten Teil zusammenfällt.

13. System nach Anspruch 1, **dadurch gekennzeichnet, daß**
der erste Formwerkzeugteil sich in den zweiten Teil mittels Injektoren (228) hinein ersteckt, die am Körper des ersten Teil befestigt sind und den ersten Kanalabschnitt enthalten.

14. System nach Anspruch 13; **dadurch gekennzeichnet, daß**
die Injektoren eine Spitze bzw. Spitzenende (241) mit konischer Gestalt haben, um nahezu schmiegsam in einen passenden konischen Sitz (240) im zweiten Formwerkzeugteil aufgenommen zu werden.

15. System nach Anspruch 13, **dadurch gekennzeichnet, daß**
die Injektoren in einer elastischen nachgiebigen Weise in einer axialen Richtung befestigt sind.

## Revendications

1. Système de moulage par injection pour un matériau vulcanisable par la chaleur, comprenant un moule (13, 113, 213) ayant des empreintes de moulage (14, 114, 214) qui sont alimentées par des canaux (17, 19, 117, 119, 217, 219) pour l'alimentation du matériau à l'état fluide et des moyens (21, 121, 221) pour vulcaniser le matériau dans les empreintes, le moule étant séparable en une première portion (16, 116, 216) contenant les premières sections (17, 117, 217) des canaux d'alimentation et une deuxième portion (18, 118, 218) contenant les sections d'extrémité (19, 119, 219) des canaux d'alimentation et les empreintes de moulage (14, 114, 214), les moyens de vulcanisation comprenant un élément (21, 121, 221) qui est interposé en relation de contact entre lesdites première et deuxième portions du moule après l'alimentation du matériau aux empreintes et comprenant à son tour des moyens (26, 126, 226) pour chauffer la surface (24, 124, 224) de l'élément venant au contact de la deuxième portion (18, 118, 218) du moule à une température suffisamment élevée pour amener le matériau dans les empreintes (14, 114, 214) à une température apte à sa vulcanisation, autour des canaux la première portion du moule (16, 116, 216) s'étendant dans la deuxième portion (18, 118, 218) de telle sorte que les sections d'extrémité (19, 119, 219) des canaux qui restent dans la deuxième portion ont une longueur réduite, **caractérisé en ce que** l'élément interposé (21, 121, 221) comporte des moyens thermorégulateurs (25, 125, 225) pour maintenir la surface (23, 123, 223) de l'élément venant en contact avec la première portion (16, 116, 216) à une température apte à éviter la vulcanisation du matériau dans les premières sections du canal (17, 117, 217).

2. Système selon la revendication 1, **caractérisé en ce que** les surfaces (23, 24, 123, 124, 223, 224) de l'élément (21, 121, 221) qui sont des surfaces de contact avec les surfaces (30, 31, 130, 131, 230, 231) de la première et de la deuxième portions du moule ont des formes épousant celles desdites surfaces (30, 31, 130, 131, 230, 231) de la première et de la deuxième portions du moule.

3. Système selon la revendication 1, **caractérisé en ce que** dans la direction d'alimentation du matériau les premières sections (17, 117, 217) du canal vont en diminuant, les sections d'extrémité (19, 119, 219) deviennent plus larges au moins au début, et dans la zone de transition (36, 136, 236) entre les premières sections et les sections d'extrémité du canal il y a un élargissement soudain du canal de sorte que la transition constitue un point cassant du matériau dans le canal lors de la séparation entre la première et la deuxième portions du moule.

4. Système selon la revendication 1, **caractérisé en ce que** les moyens thermorégulateurs comportent des conduits (25, 125, 225) pour la circulation du fluide, placés dans une zone (34, 134, 234) de l'élément (21, 121, 221) qui est proche de la surface de contact de l'élément avec la première portion du moule.

5. Système selon la revendication 1, **caractérisée en ce que** les moyens de chauffage comportent des résistances électriques chauffantes (26, 126, 226) disposées dans une zone (35, 135, 235) de l'élément (21, 121, 221) qui est proche de la surface de contact de l'élément avec la deuxième portion du moule.

6. Système selon les revendications 4 et 5, **caractérisé en ce que** la zone (34, 134, 234) avec les conduits pour la circulation du fluide et la zone (35, 135, 235) avec les résistances électriques sont séparées l'une de l'autre par une zone intermédiaire (27, 127, 227) de matériau calorifuge.

7. Système selon la revendication 4, ayant des moyens par lesquels on effectue la thermorégulation du fluide pour qu'il soit maintenu à une température proche de, mais inférieure à la température de vulcanisation.

8. Système selon la revendication 1, **caractérisé en ce que** l'élément interposé (121) comporte des saillies (140) qui sont dimensionnées convenablement et positionnées pour s'insérer dans lesdites sections d'extrémité (119) lors du déplacement de l'élément vers ladite deuxième portion du moule, et pour extraire le matériau vulcanisé desdites sections d'extrémité lors du déplacement dudit élément encore un fois loin de ladite deuxième portion du moule.

9. Système selon la revendication 8, **caractérisé en ce que** les saillies (140) définissent un évidement (141) pour l'accrochage dans le matériau en correspondance avec les sections d'extrémité (119) du canal.

10. Système selon la revendication 8, **caractérisé en ce qu'**une chambre (142) est prévue autour de chaque saillie (140), le volume de ladite chambre étant suffisant à recevoir le matériau poussé hors de la section d'extrémité (119) lors de la pénétration de la saillie dans celle-ci.

11. Système selon la revendication 8, **caractérisé en ce que** la saillie (140) est beaucoup plus courte que la section d'extrémité du canal.

12. Système selon la revendication 8, **caractérisé en ce que** la ligne de jonction (236) entre la première et la deuxième sections du canal est essentiellement coïncidente avec une ligne d'ouverture (220) des cavités de moulage dans la deuxième portion.

13. Système selon la revendication 1, **caractérisé en ce que** la première portion du moule s'étend dans la deuxième portion par des injecteurs (228) montés sur le corps de la première portion et contenant la première section du canal.

14. Système selon la revendication 13, **caractérisé en ce que** les injecteurs ont une extrémité en pointe (241) de forme conique pour être reçue à emboîtement presque parfait dans un siège conique (240) de forme conjuguée dans la deuxième portion du moule.

15. Système selon la revendication 13, **caractérisé en ce que** les injecteurs sont montés d'une façon élastiquement flexible dans une direction axiale.
